# EUROPEAN PATENT APPLICATION

(11) **EP 3 091 734 A1**
(43) Date of publication of application: **09.11.2016**
(21) Application number: 16162837.5
(22) Date of filing: 30.03.2016
(51) Int. Cl.: H04N 5/77, H04N 5/781, H04N 21/4335

(54) **METHOD AND ASSOCIATED APPARATUS FOR MANAGING VIDEO RECORDING STORAGE SPACE IN A SURVEILLANCE SYSTEM**

(30) Priority: 14.04.2015 TW 104111964
(71) Applicant: Synology Incorporated, Taipei 103 (TW)
(72) Inventor: Chan, Chih-Chun, 427 Taichung City (TW); Chiu, Yu-Hsiang, 106 Taipei City (TW); Lee, Szu-Hsien, 100 Taipei City (TW)
(74) Representative: Becker Kurig Straus

(57) **Abstract**

A method for managing video recording storage space in a surveillance system and associated apparatus (110) are provided, where the surveillance system includes at least one camera (150), and the method is applied to a control circuit (110) of the surveillance system. The method includes the steps of: calculating scores of a plurality of subsets within a series of video recording data of the surveillance system, respectively, wherein the plurality of subsets corresponds to a plurality of time intervals, respectively, and the scores are utilized for determining whether to erase at least one portion of the plurality of subsets; and selecting at least one subset from the plurality of subsets according to the scores, and erasing the subset, wherein at least one score of the subset comprises an extreme value of the scores.

## Description

The present invention relates to recording video data outputted by a camera, and more particularly, to a method and apparatus for managing video recording storage space in a surveillance system.

A data storage device in a conventional digital surveillance system stores video data outputted by a camera of the conventional digital surveillance system. The data storage device may be a hard disk drive (HDD). When the storage capacity of the HDD is insufficient, an automatic deletion mechanism may automatically delete stored data starting from the oldest video files. The main disadvantage of the conventional automatic deletion mechanism is that the conventional digital surveillance system may delete some important recording segments merely to release the storage space. Police investigations into a crime may start almost a month after the crime occurs. Without backing up useful recording segments, the evidence captured by the camera will be lost. Further, since the capturing range of a camera in the surveillance system is basically fixed, the repetitiveness of most of the recorded images is high. If deletion is made merely according to time points without considering the content, the preserved video segments may have little variety of movement or sound, which reduces their value.

In view of the above, the related art techniques cannot properly serve users. Hence, there is a need for a novel method to improve control of the digital surveillance system.

This in mind, the application aims at providing a method and apparatus in order to solve the abovementioned problems.

This is achieved by a method for managing video recording storage space in a surveillance system and associated device according to claims 1 and 11. The dependent claims pertain to corresponding further developments and improvements.

As will be seen more clearly from the detailed description following below, the claimed method: calculating scores of a plurality of subsets within a series of video recording data of the surveillance system, wherein the plurality of subsets corresponds to a plurality of time intervals, respectively, and the scores are utilized for determining whether to erase at least one portion of the plurality of subsets; and selecting at least one subset from the plurality of subsets according to the scores, and erasing the subset, wherein at least one score of the subset comprises an extreme value of the scores.

In addition, the claimed apparatus includes an interface circuit and a control circuit. The interface circuit is installed in a central control device of the surveillance system, and is arranged to couple to the camera. The control circuit is coupled to the interface circuit and installed in the central control device. The control circuit is arranged to calculate scores of a plurality of subsets within a series of video recording data of the surveillance system, wherein the plurality of subsets corresponds to a plurality of time intervals, respectively, and the scores are utilized for determining whether to erase at least one portion of the plurality of subsets. The control circuit selects at least one subset from the plurality of subsets according to the scores, and erases the subset, wherein at least one score of the subset comprises an extreme value of the scores.

In the following, the invention is further illustrated by way of example, taking reference to the accompanying drawings. Thereof:
- Fig. 1: is a diagram illustrating an apparatus for managing video recording storage space in a surveillance system according to an embodiment of the present invention,
- Fig. 2: is a flowchart illustrating a method for managing video recording storage space in a surveillance system according to an embodiment of the present invention,
- Fig. 3: is a diagram illustrating a control scheme of the method shown in Fig. 2 according to an embodiment of the present invention,
- Fig. 4: is a diagram illustrating an original importance score curve and an essential importance score curve of the method shown in Fig. 2 according to an embodiment of the present invention,
- Fig. 5: is a diagram illustrating an importance determining threshold value control scheme of the method shown in Fig. 2 according to an embodiment of the present invention,
- Fig. 6: is a diagram illustrating an update result of the essential importance score curve shown in Fig. 4 according to an embodiment of the present invention, and
- Fig. 7: is a diagram illustrating another apparatus for managing video recording storage space in a surveillance system according to an embodiment of the present invention.

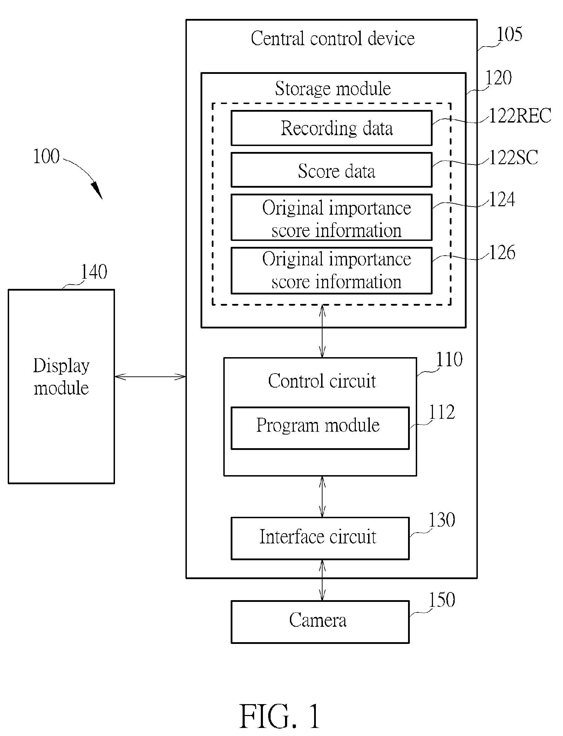

Fig. 1 is a diagram illustrating an apparatus 100 for managing video recording storage space in a surveillance system according to an embodiment of the present invention, wherein the surveillance system comprises at least one camera, such as a plurality of pan-tilt-zoom (PTZ) cameras, and the apparatus 100 may comprise at least one portion (e.g. part or all) of the surveillance system. The camera 150 shown in Fig. 1 may represent the aforementioned at least one camera, such as the plurality of PTZ cameras.

As shown in Fig. 1, the apparatus 100 comprises a central control device 105. The central control device 105 comprises a control circuit 110, a storage module 120 and an interface circuit 130. The control circuit 110 of this embodiment may comprise one or more program modules for controlling the operations of the control device 100, wherein the program module 112 shown in Fig. 1 may represent the aforementioned one or more program modules. The aforementioned one or more program modules may be firmware modules; however, this is merely for illustrative purposes, and not meant to be a limitation of the present invention. The aforementioned one or more program module may be software modules. In another example, the aforementioned one or more program modules may be implemented in a customized integrated circuit (IC).

In practice, the control circuit 110 may be implemented with a micro control unit (MCU) or a microcontroller, and the storage module 120 may be implemented with a hard disk drive (HDD). Further, in this embodiment, the storage module 120 may be used to store recording data 122REC, score data 122SC, original importance score information 124 and essential importance score information 126. The storage module 120 may be installed outside the control circuit 110, wherein the control circuit 110 is coupled to interface circuit 130, and the storage module 120 is coupled to the control circuit 110. According to some embodiments, the storage module 120 may also be integrated into the control circuit 110. For example, the storage module 120 may be implemented with a non-volatile (NV) memory. According to this embodiment, the interface circuit 130 is used to couple the aforementioned camera (e.g. the plurality of PTZ cameras), which may be the camera 150 shown in Fig. 1. The control circuit 110 may generate the recording data 122REC, the score data 122SC, the original importance score information 124 and the essential importance score information 126. Further, the control circuit 110 may update the recording data 122REC, the score data 122SC, the original importance score information 124 and the essential importance score information 126.

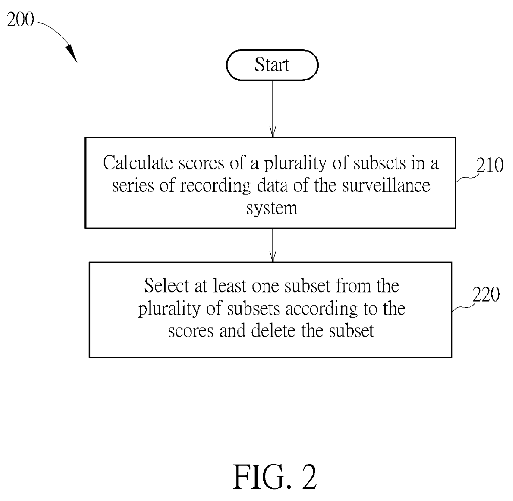

Fig. 2 is a flowchart illustrating a method 200 for managing video recording storage space in a surveillance system according to an embodiment of the present invention. The method 200 may be applied to the apparatus 100 shown in Fig. 1, particularly the central control device 105 thereof, and more particularly the control circuit 110 of the central control device 105. For example, the control circuit 110 may obtain or generate the recording data 122REC in advance, and may generate or update the score data 122SC for the recording data 122REC according to various types of data (e.g. the operations triggered by a previous user, and the attributes of the recording segments). Further, the control circuit 110 may generate or update the original importance score information 124 according to the latest version of the score data 122SC, and then the operation of Step 210 may be performed. This is merely for illustrative purposes, however, and is not meant to be a limitation of the present invention. The method is detailed in the following.

In Step 210, the control circuit 110 calculates scores of a plurality of subsets in a series of recording data of the surveillance system, wherein the plurality of subsets corresponds to a plurality of time intervals, respectively, and the scores are used to determine whether to delete at least one portion of the plurality of subsets or not. According to this embodiment, each time interval may correspond to the recording time of the series of recording data. For example, the control circuit 110 may perform statistics operations corresponding to the plurality of subsets, to generate temporary scores of the plurality of subsets. Further, the control circuit 110 may perform at least one converting operation (e.g. one or more converting operations) upon the temporary scores, to generate the scores.

In Step 220, the control circuit 110 selects at least one subset (e.g. one or more subsets) from the plurality of subsets according to the scores, and then deletes the subset, wherein at least one score of the subset comprises an extreme value of the scores. For example, under the situation that the series of recording data represents the recording data over the past month, the score of recording data of several continuous hours on a specific day within the past month will be the lowest. This may represent that this portion of recording data is less important than the remaining portions of the recording data, in which case the control circuit 110 may refer to the scores to select this portion of recording data as the aforementioned subset, and then delete this portion of recording data. In another example, under the situation that the series of recording data represents the recording data of the data over the past month, the score of the same period of recording data of several days within the past month will be the lowest. This may represent that these portions of recording data are less important than the remaining portion of data, in which case the control circuit 110 may refer to the scores to select these portion of recording data as the aforementioned subset, and then delete these portions of recording data.

According to some embodiments, the aforementioned converting operation may comprise a normalization operation. The control circuit 110 may perform the normalization operation upon the temporary scores to generate normalization results corresponding to the plurality of subsets, respectively, wherein the scores correspond to the normalization results. The converting operation may further comprise a decay calibration operation. The control circuit 110 may perform the decay calibration operation upon the normalization results by applying a decay calibration function to the normalization results, in order to generate the scores. The control circuit 110 may provide a user interface, for the user of the surveillance system to set the relationship between the decay calibration function and the recording time of the series of recording data.

For better understanding, the recording data 122REC shown in Fig. 1 may be an example of the series of recording data in Step 210, and the essential importance score information 126 shown in Fig. 1 may be an example of the scores in Step 210. Further, the score data 122SC shown in Fig. 1 may be an example of the temporary scores, and the original importance score information 124 shown in Fig. 1 may be an example of the normalization results.

According to some embodiments, the converting operation may comprise the normalization operation without comprising the decay calibration operation, wherein the scores may correspond to the normalization results, respectively. According to some embodiments, the converting operation may comprise the decay calibration operation without comprising the normalization operation. Further, the control circuit 110 may perform the decay calibration operation upon the temporary scores by applying the decay calibration function to the temporary scores, in order to generate decay calibration results corresponding to the plurality of subsets, wherein the scores correspond to the decay calibration results. For example, the control circuit 110 may provide a user interface, for the user of the surveillance system to set the relationship between the decay calibration function and the recording time of the series of recording data.

According to some embodiments, the control circuit 110 may monitor operations of the surveillance system, and may refer to the operations of the surveillance system to selectively adjust the temporary scores. For example, the control circuit 110 may monitor the operations of the surveillance system to determine whether any of the operations matches a predetermined trigger behavior within a plurality of predetermined trigger behaviors. Further, when the operation within the operations matches the predetermined trigger behavior within the plurality of predetermined trigger behaviors, the control circuit 110 may immediately adjust at least one temporary score within the temporary scores with a predetermined adjustment amount corresponding to the predetermined trigger behavior. The predetermined adjustment amount may be a positive value. In another example, the predetermined adjustment amount may be a negative value.

According to some embodiments, the control circuit 110 may provide a user interface for the user of the surveillance system to set predetermined scores corresponding to different periods. Further, the control circuit 110 may utilize at least one portion of the predetermined scores as initial values of the temporary scores.

According to some embodiments, the scores in Step 210 may represent the importance of the plurality of subsets. For example, when the score of a specific subset within the plurality of subsets is highest, this specific subset is most important; and when the score of a specific subset within the plurality of subsets is lowest, this specific subset is least important. The control circuit 110 may refer to the scores to select and delete one or more specific subsets, and preserve the remaining subsets. According to some embodiments, however, when the score of a specific subset within the plurality of subsets is lower, the specific subset is more important; and when the score of a specific subset within the plurality of subsets is higher, the specific subset is less important, wherein the control circuit 110 may refer to the scores to select and delete the subsets, and preserve the remaining subsets.

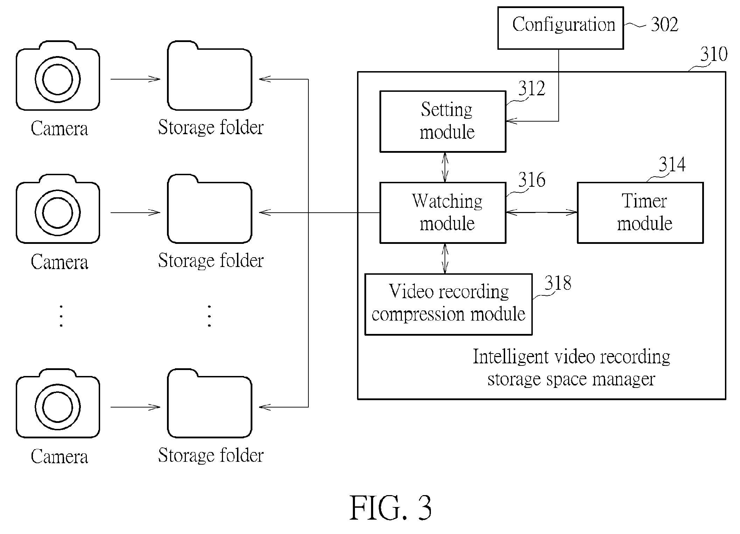

Fig. 3 is a diagram illustrating a control scheme of the method 200 shown in Fig. 2 according to an embodiment of the present invention. The intelligent video recording storage space manager 310 shown in the right part of Fig. 3 may be an example of program module 112, wherein the intelligent video recording storage space manager 310 may comprise a setting module 312, a timer module 314, a watching module 316 and a video recording compression module 318. The intelligent video recording storage space manager 310 may periodically calculate importance scores of the recording files in the storage module 120 (e.g. the hard disk drive or the non-volatile memory). Further, when the space occupied by a portion of recording data in the storage module 120 approaches a predetermined maximum value, the intelligent video recording storage space manager 310 may refer to the respective importance scores of the recording files to delete recording segments with lower importance, to ensure that the space usable for the storage module 120 is within a safe margin. For example, when the difference between the space used by the portion of recording data and the predetermined maximum value reaches a fixed value such as 1 Gigabyte (GB), the intelligent video recording storage space manager 310 may start the deleting operation.

According to this embodiment, the aforementioned least one camera may represent a plurality of cameras, such as those shown in the left part of Fig. 3, and the intelligent video recording storage space manager 310 may assign corresponding storage data folders to the cameras for storing recording data of the cameras. Further, the setting module 312 may provide an external interface of the intelligent video recording storage space manager 310, to allow the user (or an application with controlling capability) to set the maximum upper bound of the usable storage space of the storage folders, wherein the storage folders of different cameras may set different upper bound values. The external interface provided by the setting module 312 may also allow the user to set the plurality of predetermined trigger behaviors, such as those listed in Table 1. Any of the plurality of predetermined trigger behaviors may represent a predefined operation, which may trigger the event associated with the recording files, and may affect the importance of the corresponding recording segments. The configuration 302 shown in Fig. 3 may be an example of the usable storage space upper limit and the plurality of predetermined trigger behaviors of the storage folders.

The left most operation attributes are arranged to classify the plurality of detailed trigger behaviors into several operation behaviors. Each of the operation behaviors comprises some detailed trigger behaviors that may be used to trigger the adjustments of the temporary scores, making the importance score or the scores mentioned in Step 210 change correspondingly. The user may adjust the influence of each of the plurality of detailed trigger behaviors on the importance. For example, the user may set one detailed trigger behavior within the plurality of detailed trigger behaviors to add bonus score to a corresponding recording segment. In another example, the user may set another of the plurality of detailed trigger behaviors to deduct scores from a corresponding recording segment.

**Table 1**

| Operation attributes | Examples of applications of the surveillance system | Examples of detailed trigger behaviors and corresponding adding or deduction of scores. |
|---|---|---|
| Playback | Applications with the playback function such as Recording Player, Timeline, etc. | During the video playback, all recording segments of the video file get bonus scores; if a screenshot is performed during the playback, the recording segments near the time point of the screenshot get bonus scores. |
| Search | Applications such as Smart Search, Filter, etc. | When an event is searched, the recording segments near the time point of this event get bonus scores. |
| Notification | Notifications, action rules, etc. | When triggering (e.g. sending Emails according to the default settings or enabling the Short Message Service (SMS)), the recording segments near the time point of notifying the user get bonus scores. |
| Archive | Archive and download related applications | After being archived or downloaded, the video files have been permanently preserved. The user may set the related video files to deduct scores, and may also set archiving or downloading files to trigger adding or deduction of scores. |
| Analytics | Liveview analytics | When the liveview analytics detect that an event is triggered, the recording segments near the time point of triggering get bonus scores. |
| Schedule | Office hour | The user may set the predetermined importance score (or initial score) of the video file in each period. For example, it is normal that the cameras in the office constantly detect movement events during the daytime because this is working hours. The recording segments of these daytime movements are less important than detected movement events in non-working periods. |
| Elapsed Time | Not Applicable (N/A) | The user may set a time decay function, which may be an example of the decay calibration function; for example, several points may be deducted from the score every three days according to the effect of the elapsed time on the importance scores. |

In practice, when the trigger behavior is established, the control circuit 110 may send a command through the common gateway interface (CGI) to update a table associated with importance scores in a database. For example, the database may be installed in the storage module 120, and data in the table may be an example of score data 122SC.

The timing module 314 may comprise a timer, and the operations of the timer may include (but are not limited to) notifying related modules to perform associated missions in a counting down manner. For example, the monitoring module 316 may utilize the timing module 314 to preserve a timing service, and assign a predetermined period to the timing module 314. When the predetermined period expires, the timing module 314 may notify the monitoring module 316 that the time of the monitoring module is up.

Further, the monitoring module 316 may record the storage space upper limit value on the storage folders set by the setting module 312, and perform communication with other modules within the intelligent video recording storage space manager 310. After receiving the notification from the timing module 314, the monitoring module 316 may check the used space of each of the storage folders. If it is detected that a specific storage folder within the storage folders has exceeded a corresponding upper bound limit value, the monitoring module 316 may notify the video recording compression module 318 to perform a compression operation upon the video files with the storage folder, wherein the compression operation may be the operation mentioned in Step 220.

According to this embodiment, after the video recording compression module 318 obtains storage folders required to undergo video recording compression as well as the information of all video files in the storage folder from the monitoring module 316, the video recording compression module 318 may send a command through the CGI to obtain the original importance score recorded in the database, and then utilize the decay calibration function defined by the user in the module 312 to calculate the essential importance scores. After the essential importance scores of all the recording segments in the video files are calculated, the intelligent video recording storage space manager 310 may accordingly get an essential importance score curve (wherein the horizontal axis thereof may represent time) for determining importance of each recording segment. For example, the intelligent video recording storage space manager 310 may automatically compare the importance of the recording segments to perform the operations in Step 220. This is merely for illustrative purposes, and not meant to be a limitation of the present invention. According to some embodiments, the intelligent video recording storage space manager 310 may automatically compare the importance of the recording segments to perform the first step of Step 220, and perform the second step of Step 220 after the user confirms. For example, the intelligent video recording storage space manager 310 may notify the user of the importance of the recording segments by displaying the information on the user interface of the display module 140. More particularly, the essential importance score curve may be displayed to indicate one or more recording segments with lower importance, and allow the user to orientate a partial curve of the essential importance score curve through a cursor (or a directional symbol). An area on the module 140 is utilized to show the images corresponding to the recording segments, so the user can confirm whether to delete the recording segments with lower importance. After the user confirms to delete the recording segments with lower importance, the intelligent video recording storage space manager 310 may automatically perform the remaining unfinished parts of Step 220 in response to the confirmation of the user.

The details of obtaining the original importance score recorded in the database are illustrated as follows. According to this embodiment, the score data 122SC shown in Fig. 1 may be an example of the temporary scores, and the original importance score information 124 shown in Fig. 1 may be an example of the normalization results, wherein the original importance scores may be an example of the original importance score information 124, and the essential importance scores may be an example of essential importance score information 126. When requiring the scores mentioned in Step 210, the control circuit 110 may perform the normalization operation upon the score data 122SC to generate the normalization results, and store the normalization results in the database to generate or update the original importance score information 124. Hence, the intelligent video recording storage space manager 310 may obtain the original importance scores recorded in the database, and then utilize the time decay parameter to convert the original importance scores into the essential importance scores.

According to some embodiments, after calculating the original importance scores of all recording segments in all recording files, the intelligent video recording storage space manager 310 may accordingly obtain an original importance score curve (wherein the horizontal axis thereof may represent time). Further, through the user interface shown on the display module 140, the intelligent video recording storage space manager 310 may simultaneously display the original importance score curve and the essential importance score curve.

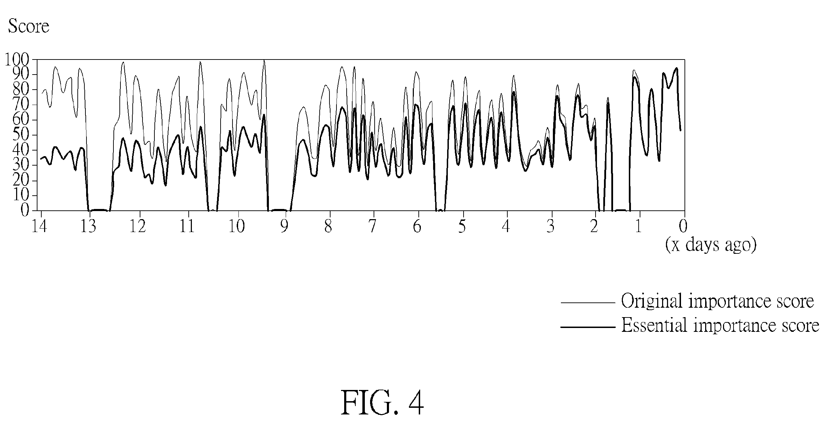

Fig. 4 is a diagram illustrating an original importance score curve and an essential importance score curve of the method 200 shown in Fig. 2 according to an embodiment of the present invention, such as the curves of the original importance scores and the curves of the essential importance scores, wherein the vertical axis represents score, and the horizontal axis represent time. Note that the horizontal axis in Fig. 4 represents "x days ago," wherein x is a positive integer. For example, when the horizontal position is 5, this means 5 days ago. According to this embodiment, some curves with score 0 represent no recording segments (e.g. no recording is performed, or the recording segments have been deleted). Further, older recording segments are more likely to have high attenuation ratios. According to some essential importance scores, the video recording compression module 318 may automatically delete least important recording segments with or without the confirmation of the user. The video recording compression module 318 may start the deletion from a recording segment corresponding to the lowest of the essential importance scores, and then individually delete recording segments corresponding to the lower essential importance scores, until the storage space occupied by the video files in the storage folder returns to a predetermined safety margin.

Note that Fig. 4 shows the curves corresponding to 14 days. This is merely for illustrative purposes, however, and not meant to be a limitation of the present invention. The maximum recording time (e.g. 14 days) corresponding to the series of recording data may be modified. In another example, the maximum recording time corresponding to the series of recording data (e.g. 70 days) may be more than the days corresponding to the curves shown in the user interface of the display module 140, wherein the user may set or switch the days corresponding to the curves shown in the user interface of the display module 140.

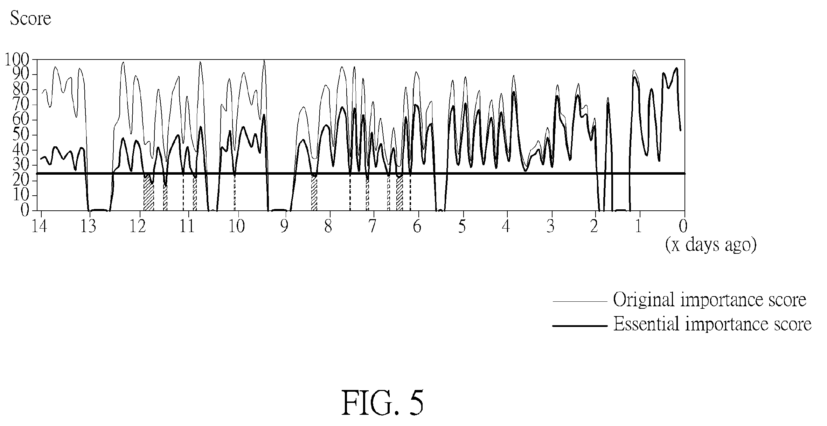

Fig. 5 is a diagram illustrating an importance determining threshold value control scheme of the method 200 shown in Fig. 2 according to an embodiment of the present invention. According to this embodiment, the intelligent video recording storage space manager 310 may refer to the user interface shown on the display module 140 to inform the user of the importance of each recording segment. More particularly, the display module 140 displays the essential importance score curve and a horizontal line (the cross line in Fig. 5) representing an importance determining threshold, to indicate one or more recording segments with lower importance. Referring to Fig. 5, the recording segments within the shaded regions may represent the recording segments with lower essential importance, and may be considered as recording segments to be deleted. In this way, the present invention may achieve a result that the recording segments with higher importance are less likely to be deleted or will be deleted later. After the deletion, the recording segments preserved in a specific recording file are dispersed, and the video recording compression module 318 may automatically divide this recording file into a plurality of recording files.

According to some embodiments, the intelligent video recording storage space manager 310 may receive the user adjustment of the importance determining threshold through the user interface displayed on the display module 140. For example, the intelligent video recording storage space manager 310 may allow the user to adjust the vertical height of the horizontal line through the user interface, and may adjust the value of the importance determining threshold in response to the user input.

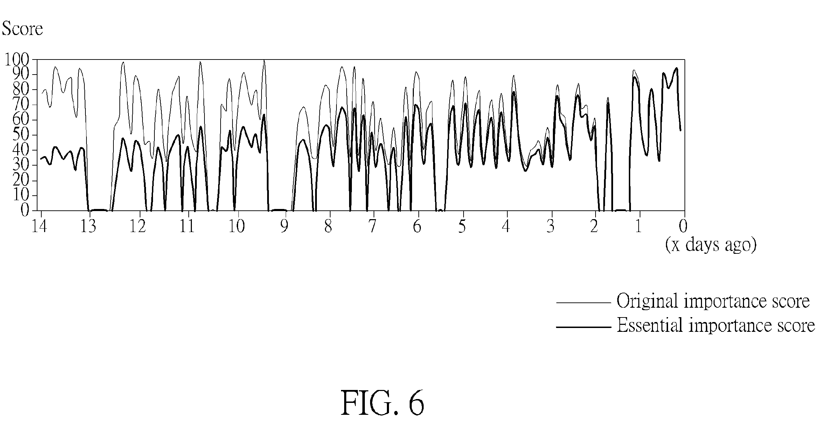

Fig. 6 is a diagram illustrating an updated result of the essential importance score curve shown in Fig. 4 according to an embodiment of the present invention, wherein some recording segments are deleted, making the essential importance score curve vary correspondingly. Since some recording segments have been deleted, the intelligent video recording storage space manager 310 may update essential importance scores of the deleted recording segments to 0, and accordingly change the essential importance score curve shown on the display module 140.

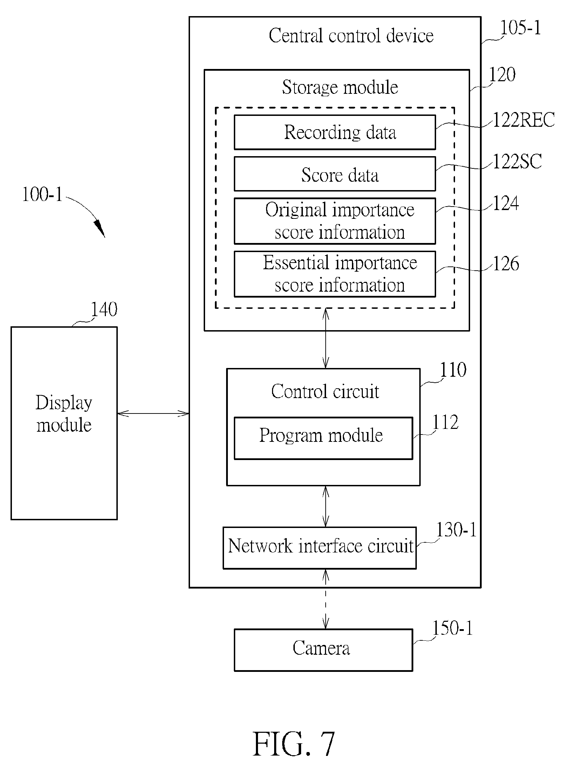

Fig. 7 is a diagram illustrating another apparatus 100-1 for managing video recording storage space in a surveillance system according to an embodiment of the present invention, wherein the method 200 shown in Fig. 2 (as well as various modifications thereof, such as the embodiments/modifications following the embodiment of Fig. 2) may also be applied to the apparatus 100-1 shown in Fig. 7, and may be applied to the central control device 105-1, and more particularly the control circuit 110 therein. Compared with the embodiment of Fig. 1, in this embodiment the interface circuit 130 is replaced with another interface circuit (i.e. the network interface circuit 130-1), and the camera 150 is replaced with the camera 150-1. According to this embodiment, the camera 150-1 may be communicated with through a network. For example, each of the plurality of cameras (e.g. the PTZ cameras) may be an internet protocol (IP) camera. In practice, as long as the camera 150-1 is connected to the network, it may send information to the central control device 105-1 through the network. Some features in this embodiment similar to those in the above embodiments/modifications are omitted here for brevity.

The method and apparatus of the present invention may adaptively select and delete recording segments with lower importance, thus releasing the storage space. Compared with related arts, the present invention also provides the following advantages:
(1). Reduce the possibility of losing important recording segments:
   Since the method and apparatus of the present invention may delete unnecessary recording segments based on the extent of the importance (e.g. from low to high importance), recording segments with higher importance are more likely to be preserved.
(2). More effectively utilize the storage space:
   The storage space for storing recording files of cameras is limited. The method and apparatus of the present invention may preserve recording segments with higher importance, thus improving the efficiency of the storage space. In conventional automatic deletion schemes, old recording files are deleted with high priority, and the weighting of the importance of recording segments cannot be modified by the user, i.e. the way of determining the importance is limited. According to related arts, the user is forced to decide which recording segments should be deleted and which recording segments should not be deleted before the storage space runs out, resulting in inefficient space management. Compared with related arts, the method and apparatus of the present invention may improve/avoid the above issues.
(3). Save the searching/viewing time for the user during the playback:
   The method and apparatus of the present invention preferentially preserves recording segments with high importance, wherein the importance of the recording segments may be determined based on user settings. Hence, when fast forwarding or rewinding, the desired recording segments can be found within a shorter time, thus saving time for the user.
(4). The user may preset the influence of events or operations on the importance:
   Since the importance of the recording segments is subjective, the same recording segment or the same operation trigger behavior may be considered to have a difference extent of influence on the importance for different people. The method and apparatus of the present invention may allow each user to preset the influence of events or operations on the importance according to their own interests.

## Claims

1. A method for managing video recording storage space in a surveillance system, where the surveillance system comprises at least one camera (150), and the method is applied to a control circuit (110) of the surveillance system, the method **characterized by**:
calculating scores of a plurality of subsets within a series of video recording data of the surveillance system, wherein the plurality of subsets corresponds to a plurality of time intervals, respectively, and the scores are utilized for determining whether to erase at least one portion of the plurality of subsets; and
selecting at least one subset from the plurality of subsets according to the scores, and erasing the subset, wherein at least one score of the subset comprises an extreme value of the scores.

2. The method of claim 1, **characterized in that** the method further comprises:
performing a statistics operation corresponding to the plurality of subsets to generate temporary scores of the plurality of subsets, respectively;
wherein the step of calculating the scores of the plurality of subsets within the series of video recording data of the surveillance system comprises:
performing at least one converting operation upon the temporary scores to generate the scores.

3. The method of claim 2, **characterized in that** the converting operation comprises a normalization operation; and the step of calculating the scores of the plurality of subsets within the series of video recording data of the surveillance system comprises:
performing the normalization operation upon the temporary scores to generate a plurality of normalization results corresponding to the plurality of subsets, respectively, wherein the scores correspond to the normalization results, respectively.

4. The method of claim 3, **characterized in that** the converting operation further comprises a decay calibration operation, and the step of calculating the scores of the plurality of subsets within the series of video recording data of the surveillance system respectively comprises:
performing the decay calibration operation upon the normalization results by applying a decay calibration function on the normalization results to generate the scores.

5. The method of claim 4, **characterized in that** the method further comprises:
providing a user interface, for a user of the surveillance system to set a relationship between the decay calibration function and recording times of the series of video recording data.

6. The method of claim 2, **characterized in that** the converting operation comprises a decay calibration operation; and the step of calculating the scores of the plurality of subsets within the series of video recording data of the surveillance system respectively comprises:
performing the decay calibration operation upon the temporary scores by applying a decay calibration function upon the temporary scores to generate a plurality of decay calibration results corresponding to the plurality of subsets, respectively, wherein the scores correspond to the decay calibration results, respectively.

7. The method of claim 2, **characterized in that** the step of performing the statistics operation corresponding to the plurality of subsets further comprises:
monitoring a plurality of operations of the surveillance system, and selectively adjusting the temporary scores according to the operations of the surveillance system.

8. The method of claim 7, **characterized in that** the step of performing the statistics operation corresponding to the plurality of subsets further comprises:
monitoring the plurality of operations of the surveillance system to determine whether any of the operations matches a predetermined trigger behavior of a plurality of predetermined trigger behaviors; and
when an operation of the plurality of operations matches a predetermined trigger behavior of the plurality of predetermined trigger behaviors, immediately adjusting at least one temporary score of the temporary scores with a predetermined adjusting amount corresponding to the predetermined trigger behavior.

9. The method of claim 2, **characterized in that** the method further comprises:
providing a user interface for a user of the surveillance system to set predetermined scores respectively corresponding to different periods; and
utilizing at least one portion of the predetermined scores as initial values of the temporary scores.

10. The method of claim 1, **characterized in that** the plurality of time intervals corresponds to recording times of the series of video recording data, respectively; and the scores represent importance of the subsets, respectively.

11. An apparatus (100) for managing video recording storage space in a surveillance system, where the surveillance system comprises at least one camera (150), the apparatus (100) comprises at least one portion of the surveillance system, and the apparatus (100) **characterized by**:
an interface circuit (130) installed in a central control device (105) of the surveillance system, the interface circuit (130) arranged to couple to the camera (150); and
a control circuit (110), coupled to the interface circuit (130) and installed in the central control device (105), the control circuit (110) arranged to calculate scores of a plurality of subsets within a series of video recording data of the surveillance system, wherein the plurality of subsets corresponds to a plurality of time intervals, respectively, and the scores are utilized for determining whether to erase at least one portion of the plurality of subsets, and the control circuit (110) selects at least one subset from the plurality of subsets according to the scores, and erases the subset, wherein at least one score of the subset comprises an extreme value of the scores.

12. The apparatus (100) of claim 11, **characterized in that** the control circuit (110) performs a statistics operation corresponding to the plurality of subsets to generate temporary scores of the plurality of subsets, respectively; and the control circuit (110) performs at least one converting operation upon the temporary scores, to generate the scores.

13. The apparatus (100) of claim 12, **characterized in that** the converting operation comprises a normalization operation; and the control circuit (110) performs the normalization operation upon the temporary scores to generate a plurality of normalization results corresponding to the plurality of subsets, respectively, wherein the scores correspond to the normalization results, respectively.

14. The apparatus (100) of claim 12, **characterized in that** the converting operation comprises a decay calibration operation; and the control circuit (110) performs the decay calibration operation upon the temporary scores by applying a decay calibration function on the temporary scores to generate a plurality of decay calibration results corresponding to the plurality of subsets, respectively, wherein the scores correspond to the decay calibration results, respectively.

15. The apparatus (100) of claim 12, **characterized in that** the control circuit (110) provides a user interface, for a user of the surveillance system to set predetermined scores respectively corresponding to different periods; and the control circuit (110) utilizes at least one portion of the predetermined scores as initial values of the temporary scores.
